Europäisches Patentamt

(19) European Patent Office

Office européen des brevets

(11) Numéro de publication: **0 037 315**
**B1**

(12) **FASCICULE DE BREVET EUROPEEN**

(45) Date de publication du fascicule du brevet:
08.08.84

(21) Numéro de dépôt: **81400439.6**

(22) Date de dépôt: **20.03.81**

(51) Int. Cl.³: **H 05 B 39/02**

(54) Dispositif de commande des variations dans le temps de la puissance d'une installation d'éclairage en fonction d'un programme pré-établi.

(30) Priorité: **28.03.80 FR 8007087**

(43) Date de publication de la demande:
**07.10.81 Bulletin 81/40**

(45) Mention de la délivrance du brevet:
**08.08.84 Bulletin 84/32**

(84) Etats contractants désignés:
**AT BE CH DE GB IT LI LU NL SE**

(56) Documents cités:
**US - A - 4 037 135**
**US - A - 4 177 407**

(73) Titulaire: **ELAM LIMITED Société dite, 2 Hume Street, Dublin 2 (IE)**

(72) Inventeur: **Tarroux, Pierre, 22, rue de Boulainvilliers, F-75016 Paris (FR)**
Inventeur: **Le Pochard, Jacques, 5, rue de la Charbonnière, F-69220 Belleville Sur Saone (FR)**

(74) Mandataire: **Joly, Jean Jacques et al, CABINET BEAU DE LOMENIE 55, rue d'Amsterdam, F-75008 Paris (FR)**

## Description

La présente invention concerne un dispositif pour commander les variations dans le temps de la puissance d'une installation d'éclairage, dispositif du type comportant: un réseau d'alimentation en courant électrique alternatif; des sources lumineuses reliées chacune au réseau d'alimentation; des circuits de variation de puissance associés respectivement aux différentes sources et comprenant chacun un élément réagissant aux variations d'amplitude d'une grandeur électrique pour faire varier la puissance électrique fournie à la source; et des circuits de commande associés respectivement aux différentes sources pour commander les variations d'amplitude de ladite grandeur électrique en fonction du temps.

Un domaine particulier d'application de l'invention est celui de la commande du niveau d'éclairement d'une installation d'éclairage public en fonction du temps.

Dans le souci de faire des économies d'énergie, il a déjà été proposé des dispositifs permettant de modifier le niveau d'éclairement de sources lumineuses d'une installation d'éclairage à certaines heures de la journée.

Dans le cas de lampes à décharge, un dispositif connu consiste à commander la mise en circuit d'une bobine d'induction supplémentaire en série avec celle normalement prévue pour limiter le courant de décharge dans la lampe. La mise en circuit est réalisée au moyen d'un interrupteur, par exemple un relais mécanique ou un circuit à semi-conducteur, dont l'état est commandé par un signal transmis par un fil pilote commun à l'installation d'éclairage.

Un tel dispositif ne permet pas de choisir d'autres modes de fonctionnement que puissance normale et puissance réduite et nécessite le câblage d'un fil pilote en parallèle avec les lignes du réseau d'alimentation.

Une autre technique connue consiste à faire varier en tête de ligne la tension du réseau d'alimentation sur laquelle les différentes sources lumineuses sont branchées. Plusieurs niveaux de puissance peuvent alors être sélectionnées. Toutefois, toutes les sources lumineuses sont alors commandées de façon identique. Or, il est quelquefois souhaitable d'avoir des puissances d'éclairement différentes dans diverses zones d'un secteur couvert par une installation d'éclairage, en particulier d'une installation d'éclairage public.

La présente invention a pour but de fournir un dispositif de commande réunissant notamment les propriétés suivantes:

— commande automatique des variations de puissance d'éclairement au cours d'une période donnée,
— absence de fil pilote, et
— possibilité de commande individualisée pour chaque source lumineuse de l'installation.

Ce but est atteint par un dispositif du type défini en tête de la présente description, dispositif dans lequel, conformément à l'invention, chaque circuit de commande associé à une source lumineuse comporte:

— un circuit d'horloge fournissant des signaux d'horloge à des intervalles de temps prédéterminés,
— un circuit de programme d'éclairement dans lequel est inscrit un programme représentant les variations désirées dans le temps de la puissance d'élcairement pendant une période donnée,
— un circuit de sélection recevant les signaux d'horloge et relié au circuit de programme pour sélectionner une puissance d'éclairement fonction du temps écoulé à partir de l'origine de ladite période, et,
— un circuit de sortie relié à la mémoire et convertissant la puissance sélectionnée en amplitude de ladite grandeur électrique.

Le programme d'éclairement est ainsi lu au rythme des signaux d'horloge pendant une période de fonctionnement correspondant par exemple à un cycle d'éclairage journalier.

Selon une particularité du dispositif conforme à l'invention, les signaux d'horloge ont une fréquence obtenue par division de celle du réseau. On peut choisir pour les signaux d'horloge une fréquence égale par exemple à environ une heure, le programme étant établi de manière à attribuer une puissance d'éclairement particulière pour chaque tranche horaire de la période de fonctionnement. Au début de cette période, le circuit d'horloge est remis à zéro au moyen d'un circuit de remise à zéro, relié au réseau pour être activé au moment de la mise sous tension du réseau.

En variante, le circuit d'horloge peut être constitué par un oscillateur, par exemple à quartz, fonctionnant avec une source d'énergie autonome ou alimenté par le réseau lorsque celui-ci est mis sous tension.

Selon une autre particularité du dispositif conforme à l'invention, le circuit de variation de puissance associé à une source lumineuse comporte un circuit interrupteur branché entre une borne de réseau d'alimentation et la source et un circuit provoquant la fermeture du circuit interrupteur pendant une fraction ajustable de chaque alternance de la tension du réseau. Le circuit interrupteur peut par exemple être constitué, comme connu en soi, par un élément du genre thyristor ou triac dont les durées de fonctionnement et de non-fonctionnement peuvent être déterminées au moyen d'un multivibrateur monostable fournissant des impulsions de durée variable. Un circuit de variation de puissance d'éclairement de ce type décrit dans la demande de brevet français n° 7 931 108 déposée le 19 décembre 1979 sous le titre »Circuit d'alimentation, notamment d'une lampe à décharge« laquelle correspond au EP-A-0 032 089 publié 15.07.81. La durée des impulsions du monostable est commandée par la grandeur de sortie du circuit de commande. Cette grandeur de sortie peut alors être par exemple une tension électrique continue appliquée audit monostable en tant que tension de charge dont la variation provoque une variation en sens inverse de la durée des impulsions produites par le monostable.

Selon encore une autre üarticularité du dispositif conforme à l'invention, le circuit de programme se présente sous forme d'un module enfichable. La modification du programme d'éclairement d'une source lumineuse peut alors être réalisée très simplement en déconnectant le circuit de programme pour le remplacer par un autre ou par le même modifié.

Avantageusement encore, le circuit de variation de puissance et le circuit de commande associés à une source lumineuse sont alimentés en énergie électrique à partir du réseau et sont logés dans le boîtier sur lequel la source lumineuse est montée. Le montage de ces circuits est alors extrêmement simplifié et peut être réalisé sur des installations existantes sans entraîner de modifications importantes, ce qui représente un avantage très important.

D'autres particularités et avantages du dispositif conforme à l'invention apparaîtront à la lecture de la description faite ci-après, à titre indicatif mais non limitatif, en référence aux dessins annexés sur lesquels:

la fig. 1 est une vue schématique des circuits associés à une source lumineuse dans un dispositif conforme à l'invention,

la fig. 2 est une représentation d'un programme d'éclairement, et

la fig. 3 est un ensemble de courbes montrant les relations entre la tension de charge appliquée au multivibrateur monostable illustré par la fig. 1 et la durée des impulsions produites par ce monostable.

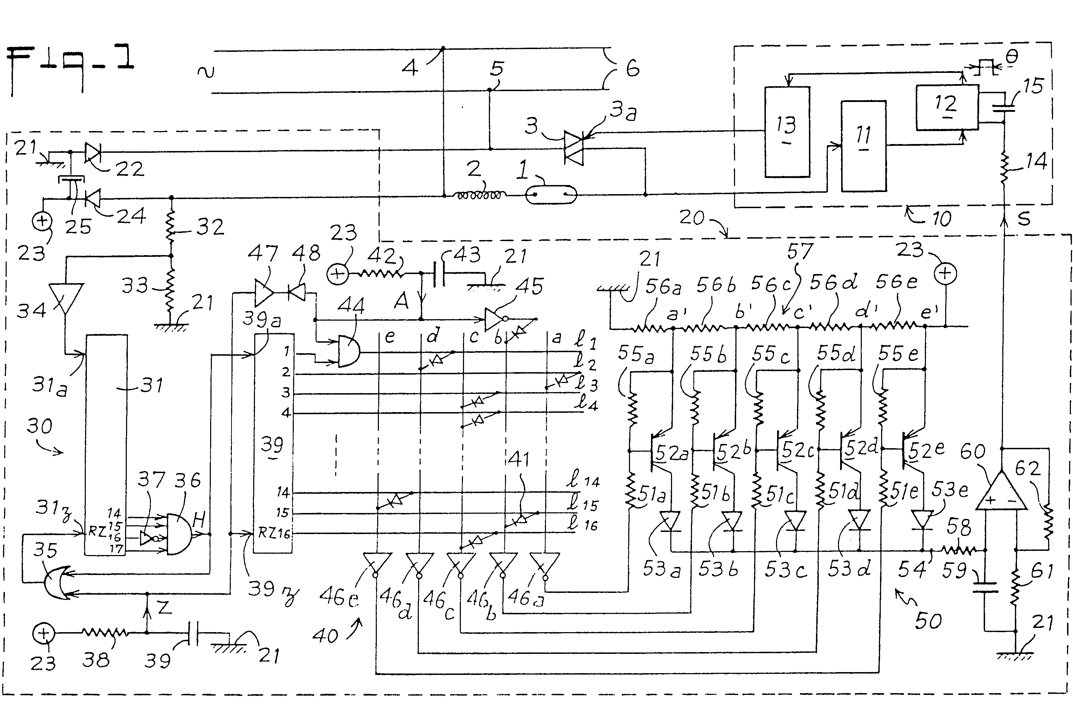

Sur la fig. 1, on a représenté une lampe à décharge 1 branchée en série avec une bobine d'induction 2, formant ballast, et avec un triac 3, formant interrupteur commandé, entre deux bornes de raccordement 4, 5 à un réseau 6 d'alimentation en courant électrique alternatif.

Les états de conduction et de non-conduction du triac 3 sont déterminés au moyen d'un circuit 10 de variation de puissance d'éclairement, pour maintenir le triac 3 conducteur pendant une fraction réglable de chaque alternance de la tension du réseau en fonction de l'amplitude de la grandeur de sortie S d'un circuit de commande 20.

La tension d'alimentation en continu nécessaire au fonctionnement des éléments des circuits 10 et 20 est produite par redressement et limitation de celle du réseau.

On n'a représenté sur la fig. 1 que les circuits associés à une lampe 1. Bien entendu, des circuits identiques sont associés à chaque lampe d'une installation d'éclairage alimentée par le réseau 6.

Le circuit 10 est par exemple du type de celui décrit dans la demande de brevet français n˙ 7 931 108 (EP-A-0 032 089). Il comporte un circuit 11 dont l'entrée est connectée au point commun entre la lampe 1 et le triac 3 et qui détecte les passages à zéro de la tension aux bornes de la lampe 1. A chaque détection de passage à zéro, le circuit 11 délivre une impulsion qui déclenche un multivibrateur monostable 12. Celui-ci délivre une impulsion de durée réglable $\theta$ à un circuit 13 qui est relié à la gâchette 3a du triac 3 pour bloquer celui-ci pendant la durée $\theta$. Ainsi, le monostable 12 détermin des périodes de nonconduction du triac 3, et plus la durée $\theta$ des impulsions du monostable 12 est grande, plus la puissance d'éclairement de la lampe 1 est petite. Cette durée $\theta$ varie suivant l'amplitude de la grandeur de sortie S d'une manière qui sera décrite plus loin en détail.

Le circuit de commande 20 comprend essentiellement une horloge 30, un circuit de sélection 39 branché en sortie de l'horloge 30, un circuit de programme d'éclairement 40 dont les entrées sont reliées au circuit de sélection 39 et un circuit de sortie 50 relié aux sorties du circuit de programme d'éclairement 40 et délivrant la grandeur de sortie S.

Une borne de référence 21, ou masse du circuit 20 est reliée à la borne 5 par l'intermédiaire d'une diode 22, tandis qu'une borne de potentiel positif 23 est reliée à la borne 4 par l'intermédiaire d'une diode 24. Les diodes 22 et 24 évitent tout retour vers le réseau. Un condensateur 25 est branché entre les bornes 23 et 21.

Le circuit d'horloge 30 comporte un compteur 31 cont l'entrée 31a est reliée à la borne 4 par l'intermédiaire d'un pont diviseur de tension formé par deux résistances 32, 33 et d'un circuit adaptateur 34. Le circuit adaptateur 34 convertit la tension de phase du réseau prélevée sur la borne 4 et divisée par le pont 32—33 en impulsions de niveau compatible avec le circuit logique 31. Le compteur 31 est un compteur binaire dont les sorties sont combinées de manière que le circuit d'horloge délivre des signaux d'horloge de période prédéterminée. Par exemple, la fréquence du réseau étant de 50 Hz et la période désirée des signaux d'horloge étant une heure, le circuit 30 doit constituer un diviseur de fréquence par 180 000. Une valeur approchée de ce nombre est donnée par $2^{14} + 2^{15} + 2^{17}$. Une porte ET 36 à quatre entrées a trois entrées reliées directement aux sorties binaires de rang, 14, 15 et 17 du compteur 31 et sa quatrième entrée reliée à la sortie de rang 16 par l'intermédiaire d'un inverseur 37. Un signal d'horloge H apparaît en sortie de la porte ET lorsque le contenu du compteur 41 attent la valeur $2^{14} + s^{15} + 2^{17}$ (soit 180 224). Le signal H est appliqué par l'intermédiaire d'une porte OU 35 à l'entrée 31z de remise à zéro du compteur 31. Ainsi, le circuit d'horloge 30 délivre des signaux d'horloge avec une période d'environ une heure (en fait 1 h. et 4,48 s, la précision étant largement suffisante pour l'application envisagée). On notera que l'on pourra réaliser un diviseur par 180 000 exactement en combinant de la manière adéquate les sorties binaires du compteur 31 et, donc en compliquant quelque peu le circuit d'horloge.

Le compteur 31 est remis à zéro au moment de la mise sous tension du réseau par un signal Z appliqué à une entrée de la porte OU 35 et prélevé au point milieu entre une résistance 38 reliée à son autre borne à la borne 23 et un condensateur 39 relié à son autre borne à la masse 21.

Dans l'exemple illustré, le circuit de programme d'éclairement 40 est formé par une matrice comportant des lignes $l_1$, $l_2$, ... $l_{15}$, $l_{16}$ et des colonnes a, b, c, d, e ... Les lignes correspondent aux tranches horaires successives d'une période d'éclairement, par exemple une période d'éclairement journalière pour une installation d'éclairage public. Chaque ligne correspond à une tranche horaire de la période d'éclairement. Le nombre de lignes est ici choisi égal à 16; il pourra être inférieur ou supéreur. Chaque colonne correspond à un niveau du puissance d'éclairement. Le nombre de colonnes est ici égal à cinq, ce qui permet de sélectionner un parmi cinq niveaux différents par exemple croissant entre a et e. Bien entendu, le nombre de niveaux disponibles pourra être choisi inférieur ou supérieur à cinq.

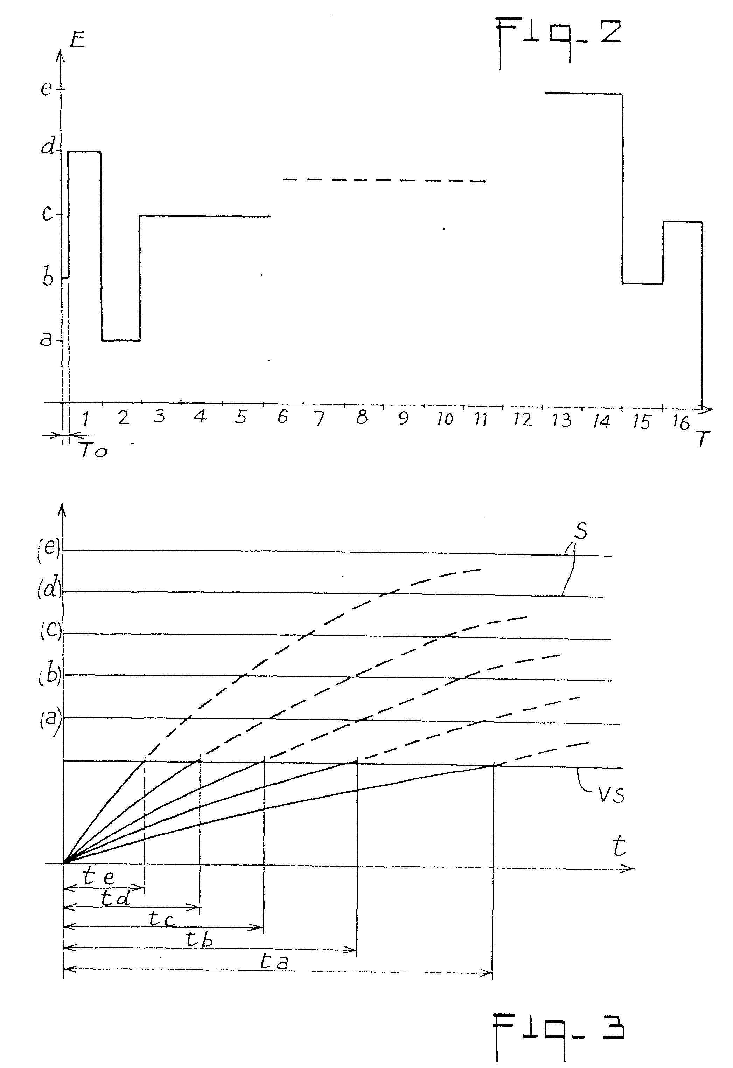

Le circuit 40 est complété par des éléments de connexion 41 reliant chaque ligne à une colonne particulière en fonction de la puissance d'éclairement désirée pendant la tranche horaire correspondant à la ligne. La fig. 2 illustre, à titre d'exemple, une partie d'un gabarit représentant les niveaux d'éclairement E désirés en fonction des tranches horaires T, ce qui est traduit par le circuit 40 de la fig. 1.

Le circuit de sélection 39 est un compteur ordinal recevant sur son entrée 39a les signaux d'horloge H et ayant 16 sorties reliées aux lignes de la matrice 40. Un signal de niveau logique haut est produit sur la $n^{ème}$ sortie du compteur 39 lorsque celui-ci reçoit le $n^{ème}$ signal d'horloge H, ce qui signifie que l'on entre dans la $n^{ème}$ tranche horaire depuis la mise sous tension du réseau. On notera que le signal Z est appliqué à l'entrée de remise à zéro 39z du compteur 39 pour remettre celui-ci à zéro à la mise sous tension du réseau.

Au début de la période d'éclairement, il est préférable que l'allumage de la lampe 1 soit effectué sous puissance réduite, par exemple au niveau de puissance b. Un circuit série formé d'une résistance 42 et d'un condensateur 43 forme un circuit à constante de temps branché entre la borne 23 et la masse 21. La tension A prélevée entre la masse 21 et le point commun entre la résistance 42 et le condensateur 43 croît progressivement. Cette tension A est appliquée à une entrée d'une porte ET 44 à deux entrées dont l'autre entrée est reliée à la première sortie du circuit de sélection 39 et dont la sortie est reliée à la première ligne de matrice 40. Au bout d'un temps $T_o$ suivant la mise sous tension du réseau, la tension A atteint une valeur suffisante pour ouvrir la porte 44 au signal présent sur la première sortie du circuit de sélection et autoriser la transmission de ce signal sur la première ligne de la matrice 40. Pendant le temps $T_o$, un signal est produit par un inverseur 45 recevant la tension A et dont la sortie est connectée à la colonne b de la matrice 40. Le temps $T_o$ est choisi égal à une petite franction de la première tranche horaire, par exemple quelques minutes.

Le signal Z est appliqué à l'entrée d'un opérateur 47 dont la sortie est connectée par une diode 48 au point commun entre la résistance 42 et le condensateur 43. L'opérateur 47 a une tension de sortie nulle tant que la tension d'entrée n'a pas atteint le seuil de basculement de l'opérateur. Ainsi, à la mise sous tension du réseau, le condensateur 43 est complètement déchargé et il ne peut se charger tant que l'opérateur 47 n'a pas basculé car il est shunté par la diode 48. La temporisation ne prendra donc effet qu'à partir du moment où l'amplitude du signal Z aura atteint le seuil de basculement de l'opérateur 47. On assure ainsi que la durée $T_o$ sera respectée dans tous les cas.

Les colonnes de la matrice 40 sont reliées par l'intermédiaire d'amplificateurs adaptateurs-inverseurs 46a à 46e et de résistance 51a à 51e aux bases de transistors 52a à 52e du circuit de sortie 50. Chaque transistor a son collecteur relié à une sortie commune 54 par une diode respective 53a à 53e, et son émetteur relié, d'une part, à sa base par une résistance respective 55a à 55e, et, d'autre part, à une borne de sortie intermédiaire respective a', b', c', d', e' d'un diviseur de tension 57 formé de résistance 56a à 56e branchées en série entre la masse 21 et la borne 23.

Le signal présent sur la colonne sélectionnée de la matrice 40 provoque le déblocage du transistor correspondant parmi les transistors 52a à 52e et l'apparition sur la borne commune 54 de la tension présente sur la borne intermédiaire correspondante du diviseur de tension 57.

Ainsi, chaque niveau de puissance d'éclairement sélectionné est converti en un niveau de tension continue particulier sur la borne commune 54.

La tension sur la borne commune 54 varie par palier lorsque les colonnes sélectionnées dans le circuit 40 changent, cette tension étant d'autant plus grande que le niveau d'éclairement souhaité est plus élevé. Il est préférable d'éviter que ces variations par paliers se traduisent par des variations brutales de la puissance électrique fournie à la lampe 1, en particulier lorsque la puissance est diminuée, dans le cas d'une lampe à décharge. En effet, une brusque chute de puissance peut provoquer une variation de la tension d'arc conduisant à un décrochement de la lampe. Aussi, les variations par paliers de la tension sur la borne 54 sont-elles intégrées pour être transformées en variations progressives. A cet effet, un circuit à constante de temps comportant une résistance 58 en série avec un condensateur 59 est branché entre la borne 54 et la masse 21. Le point milieu entre la résistance 58 et le condensateur 59 est appliqué à l'entrée non- inverseuse d'un amplificateur 60 dont l'entrée inverseuse est reliée à la masse 21 par une résistance 61. La sortie de l'amplificateur 60 est reliée à l'entrée inverseuse par une résistance 62 et constitue la sortie du circuit de commande sur laquelle est disponible la grandeur de sortie S sous forme d'une tension variable.

L'amplitude de la tension D détermine la durée $\theta$ des impulsions délivrées par le circuit monostable 12. Dans le cas présent, la durée $\theta$ est le temps qui s'écoule entre le moment où commence la charge du condensateur 15 du monostable, c'est-à-dire au moment du déclenchement du monostable, (front arrière de l'impulsion 1) et le moment où la tension aux bornes du condensateurs 15 atteint la valeur de seuil pour laquelle le circuit de sortie du monostable est commuté et fait revenir le monostable à son état stable (front avant de l'impulsion). La valeur de seuil est atteinte d'autant plus rapidement que la tension sous laquelle le condensateur 15 se charge est élevée.

La grandeur de sortie S est utilisée comme tension de charge du monostable 12. Elle est appliquée à l'une des bornes du condensateur 15 par l'intermédiaire d'une résistance 14. Plus l'amplitude de la grandeur de sortie S est élevée et plus court est le temps au bout duquel la tension aux bornes du condensateur 15 atteint la valeur de seuil VS. Ainsi, comme le montre la fig. 3, lorsque le niveau d'éclairement souhaité croît, la durée $\theta$ des impulsions fournies par le monostable prend des valeurs $t_a$ à $t_e$ décroissantes et le temps de non-conduction du triac décroît d'autant.

Comme déjà indiqué, les circuits 10 et 20 sont alimentés au moment de la mise sous tension du réseau et ne nécessitent pas de source d'alimentation continue auxiliaire. Ces circuits présentent en outre un encombrement réduit et peuvent être logés dans le boîtier de la lampe 1.

La constitution du circuit de programme 40 est extrêmement simple, ce qui permet de modifier le programme d'éclairement très rapidement. Avantageusement, la matrice 40 est montée sur un support enfichable. La programmation du circuit de commande peut alors être modifiée simplement par déconnexion de la matrice en place et enfichage d'une autre matrice.

On notera que l'ensemble circuit de programme 40 et circuit de sélection constituent une mémoire et son circuit d'adressage associé. Aussi, on pourra remplacer cet ensemble par tout autre dispositif comportant une mémoire et des moyens d'accès à cette mémoire, par exemple une mémoire morte et un compteur d'adressage réalisé sous forme de circuit intégré.

En outre, comme déjà indiqué, le circuit d'horloge pourra être constitué par une base de temps indépendante de la fréquence du réseau, par exemple un oscillateur à quartz alimenté de façon autonome ou non. Dans ce cas, le circuit d'horloge pourra lui aussi être réalisé sous forme de circuit intégré.

Il est important encore de noter que la réalisation d'au moins les fonctions d'horloge et de programme au moyen de dispositif mettant en oeuvre les techniques de microprogrammation entre dans le cadre de la présente invention. Ainsi, les circuits d'horloge, de programme, de sélection, et éventuellement au moins une partie du circuit de sortie peuvent être réalisés sous la forme d'un microprocesseur programmé à cet effet.

Par ailleurs, la grandeur de sortie du circuit de commande peut être une grandeur électrique autre qu'une tension électrique, par exemple une résistance ou une fréquence variable. Le circuit de variation de puissance est alors conçu de manière à réagir aux variations de la grandeur électrique choisie.

Enfin, bien que l'on ait envisagé le cas de la commande de puissance d'une installation d'éclairage à lampes à décharge, cette commande peut être utilisée pour d'autres types de sources d'éclairement.

**Revendications**

1. Dispositif pour commander les variations dans le temps de la puissance d'une installation d'éclairage, notamment d'une installation d'éclairage public, comprenant des sources lumineuses (1) reliées chacune à un réseau (6) d'alimentation en courant électrique alternatif, ledit dispositif comportant; des circuits de variation de puissance (10) associés respectivement aux différentes sources et comprenant chacun un élément (12) réagissant aux variations d'amplitude d'une grandeur électrique (5) pour faire varier la puissance électrique fournie à la source; et des circuits de commande (20) associés respectivement aux différentes sources (1) pour commander les variations d'amplitude de ladite grandeur électrique (5) en fonction du temps, de manière que la puissance d'élcairement fournie par les sources (1) varie de façon prédéterminée au cours d'une période de fonctionnement de l'installation, caractérisé en ce que chaque circuit de commande (20) associé à une source (1) comporte:

— un circuit d'horloge (30) fournissant des signaux d'horloge (H) à des intervalles de temps prédéterminés,
— un circuit de programme d'éclairement (40) dans lequel est inscrit un programme représentant les valeurs successives désirées de la puissance d'éclairement fournie par la source (1) pendant une période donnée,
— un circuit de sélection (39) recevant les signaux d'horloge (H) et relié au circuit de programme (40) pour sélectionner une puissance d'éclairement fonction du temps écoulé à partir de l'origine de ladite période, et,
— un circuit de sortie (50) relié au circuit de programme et convertissant la puissance sélectionnée en amplitude de ladite grandeur électrique (S).

2. Dispositif selon la revendication 1, caractérisé en ce que le circuit d'horloge (30) comporte un diviseur (31) de la fréquence du réseau.

3. Dispositif selon l'une quelconque des revendications 1 et 2, caractérisé en ce que le circuit de programme (40) est formé par une matrice ayant plusieurs entrées ($l_1 - l_{16}$) reliées au circuit de sélection (39), plusieurs sorties (a—e) correspondant à différentes puissance d'éclairement et reliées chacune à une borne de commande d'un circuit interrupteur (52a—52e) particulier et des connexions (41) reliant chaque entrée à une sortie déterminée en fonction du programme désiré de variation de puissance d'éclairement.

4. Dispositif selon l'une quelconque des revendications 1 à 3, caractérisé en ce que chaque circuit de commande (20) comporte un circuit de remise à zéro (38, 39) relié au réseau (6) pour remettre le circuit d'horloge (31) à zéro lors de la mise sous tension du réseau.

5. Dispositif selon l'une quelconque des revendications 1 à 4, caractérisé en ce que la grandeur de sortie (S) est une tension électrique continue dont l'amplitude varie en fonction des puissances sélectionnées.

6. Dispositif selon la revendication 5, caractérisé en ce que le circuit de variation de puissance (10) associé à une source lumineuse (1) comporte un circuit interrupteur (3) branché entre une borne (5) du réseau d'alimentation (6) et la source (1), et un circuit multivibrateur monostable (12) fournissant des impulsions de durée variable pour que le circuit interrupteur (3) soit fermé pendant une fraction ajustable de chaque alternance de la tensions du réseau, et en ce que la grandeur de soirte (S) du circuit de commande associé (20) est appliquée audit monostable (12) en tant que tension de charge dont la variation provoque une variation en sens inverse de la durée ($\vartheta$) des impulsions produites par le monostable (12).

7. Dispositif selon la revendication 6, caractérisé en ce que le circuit de variation de puissance (10) comporte un circuit (13) branché entre le monostable (12) et une électrode de commande (3a) du circuit interrupteur (3) pour provoquer l'ouverture de ce dernier pendant le durée ($\vartheta$) des impulsions produites par le monostable (12), le grandeur électrique (S) fournie par le circuit de commande étant une tension continue dont l'amplitude croît lorsque la puissance d'éclairement sélectionnée augmente.

8. Dispositif selon l'une quelconque des revendications 1 à 7, caractérisé en ce que la grandeur de sortie (S) est une tension électrique continue variable par paliers en fonction de niveaux de puissance d'éclairement sélectionnée, et en ce que le circuit de sortie (50) du circuit de commande (20) comporte un circuit à constante de temps (58, 59) pour faire varier progressivement l'amplitude de la grandeur de sortie d'un palier à un autre.

9. Dispositif selon l'une quelconque des revendications 1 à 8, caractérisé en ce que chaque circuit de commande (20) comporte un circuit temporisateur (42, 43) qui inhibe la sortie du circuit de sélection (39) pendant un temps déterminé à partir de la mise sous tension du réseau pour imposer, à l'allumage de la source associée, une puissance d'éclairement réduite prédéterminée.

10. Dispositif selon l'une quelconque des revendications 1 à 9, caractérisé en ce que le circuit de sélection (39) comporte un compteur recevant les signaux d'horloge (H) et ayant plusieurs sorties (1—16) reliées au circuit de programme (40), un signal apparaissant sur une de ces sorties lorsqu'un nombre particulier de signaux d'horloge (H) a été compté.

11. Dispositif selon l'une quelconque des revendications 1 à 10, caractérisé en ce que le circuit de sortie (50) comporte plusieurs circuits interrupteurs (52a à 52e) commandés sélectivement en fonction de la puissance sélectionnée, chaque circuit interrupteur ayant une borne de commande et étant branché entre une borne particulière (a' à e') et une borne de sortie commune (54).

12. Dispositif selon la revendication 11, caractérisé en ce que ladite borne particulière est l'une parmi plusieurs bornes intermédiaires échelonnées (a' à e') d'un circuit diviseur de tension (57).

13. Dispositif selon l'une quelconque des revendications 1 à 12, caractérisé en ce que le circuit de programme (20) se présente sous forme d'un module enfichable.

14. Dispositif selon l'une quelconque des revendications 1 à 13, caractérisé en ce que le circuit de variation de puissance (10) et le circuit de commande (20) associés à une source lumineuse (3) sont alimentés en énergie électrique à partir du réseau et son logés dans un boîtier sur lequel la source lumineuse est montée.

15. Dispositif selon l'une quelconque des revendications 1 à 14, caractérisé au moins en ce que les circuits d'horloge (30), de programme (20) et de sélection (39) sont réalisés sous forme de circuit intégré.

16. Dispositif selon l'une quelconque des revendications 1 à 14, caractérisé en ce qu'au moins les circuits d'horloge (30), de programme (20) et de sélection (39) sont réalisés au moyen d'un microprocesseur.

**Patentansprüche**

1. Vorrichtung zum Steuern der zeitlichen Veränderungen der Leistung einer Beleuchtungsanlage, insbesondere einer öffentlichen Beleuchtungsanlage, mit jeweils an ein Wechselstrom-Versorgungsnetz (6) angeschlossenen Lichtquellen (1), welche Vorrichtung umfaßt: Leistungsveränderungskreise (10), die jeweils mit verschiedenen Quellen verbunden sind und jeweils ein auf Amplitudenveränderungen einer elektrischen Größe (S) reagierendes Element (12) zum Verändern der an die Quelle gelieferten elektrischen Leistung enthalten, und jeweils mit den verschiedenen Quellen (1) verbundene Steuerkreise (20) zum Steuern der Amplitudenveränderungen der elektrischen Größe (S) als Funktion der Zeit derart, daß die von den Quellen (1) gelieferte Beleuchtungsstärke auf vorbestimmte Weise im Verlauf einer Funktionsperiode der Einrichtung variiert, dadurch gekennzeichnet, daß jeder mit einer Quelle (1) verbundene Steuerkreis (20) folgendes umfaßt:

— einen Taktgeberkreis (30), der in vorbestimmten Zeitintervallen Taktsignale (H) liefert,
— einen Beleuchtungsprogrammkreis (40), in welchem ein Programm mit den aufeinanderfolgenden gewünschten Werten der von der Quelle (1) gelieferten Beleuchtungsstärke während einer gegebenen Periode gespeichert ist,
— einen die Taktsignale (H) empfangenden und mit dem Programmkreis (40) verbundenen Auswahlkreis (39) zur Auswahl einer Beleuchtungsstärke als Funktion der ab dem Beginn der Periode verstrichenen Zeit und
— einen an den Programmkreis angeschlossenen Ausgangskreis (50), der die gewählte Leistung als Amplitude der elektrischen Größe (S) umwandelt.

2. Vorrichtung nach Anspruch 1, dadurch gekennzeichnet, daß der Taktgeberkreis (30) einen Netzfrequenzteiler (31) umfaßt.

3. Vorrichtung nach einem der Ansprüche 1 und 2, dadurch gekennzeichnet, daß der Programmkreis (40) durch eine Matrix mit mehreren an den Auswahlkreis (39) angeschlossenen Eingängen ($I_1 - I_{16}$), mehreren verschiedenen Beleuchtungsstärken entsprechenden und jeweils an eine Steuerklemme eines bestimmten Unterbrecherkreises (52a—52e) angeschlossenen Ausgängen (a—e) und jeden Eingang mit einem bestimmten Ausgang als Funktion des gewünschten Beleuchtungsstärke-Veränderungsprogramms verbindenden Anschlüssen (41) gebildet ist.

4. Vorrichtung nach einem der Ansprüche 1 bis 3, dadurch gekennzeichnet, daß jeder Steuerkreis (20) einen an das Netz (6) angeschlossenen Nullrückstellkreis (38, 39) zum Rücksetzen des Taktgeberkreises (31) auf Null bei Anlegen von Spannung an das Netz umfaßt.

5. Vorrichtung nach einem der Ansprüche 1 bis 4, dadurch gekennzeichnet, daß die Ausgangsgröße (S) eine elektrische Gleichspannung ist, deren Amplitude als Funktion der gewählten Leistungen variiert.

6. Vorrichtung nach Anspruch 5, dadurch gekennzeichnet, daß der mit einer Lichtquelle (1) verbundene Leistungsveränderungskreis (10) einen zwischen einer Klemme (5) des Versorgungsnetzes (6) und der Quelle (1) abzweigenden Unterbrecherkreis (3) und einen monostabilen Multivibratorkreis (12) umfaßt, welcher Impulse variabler Dauer liefert, damit der Unterbrecherkreis (3) während eines einstellbaren Bruchteiles jeder Halbperiode der Netzspannung geschlossen ist, und daß die Ausgangsgröße (S) des zugehörigen Steuerkreises (20) als Ladespannung, deren Veränderung eine Veränderung der Dauer ($\vartheta$) der vom monostabilen Kreis (12) erzeugten Impulse im umgekehrten Sinn bewirkt, an den monostabilen Kreis (12) angelegt wird.

7. Vorrichtung nach Anspruch 6, dadurch gekennzeichnet, daß der Leistungsveränderungskreis (10) einen zwischen dem monostabilen Kreis (12) und einer Steuerelektrode (3a) des Unterbrecherkreises (3) abzweigenden Kreis (13) zum Bewirken des Öffnens des letzteren während der Dauer ($\vartheta$) der vom monostabilen Kreis (12) erzeugten Impulse umfaßt, wobei die vom Steuerkreis gelieferte elektrische Größe (S) eine Gleichspannung ist, deren Amplitude bei Ansteigen der gewählten Beleuchtungsstärke wächst.

8. Vorrichtung nach einem der Ansprüche 1 bis 7, dadurch gekennzeichnet, daß die Ausgangsgröße (S) eine als Funktion des Pegels der gewählten Beleuchtungsstärke stufenweise variierbare elektrische Gleichspannung ist und daß der Ausgangskreis (50) des Steuerkreises (20) einen Kreis mit Zeitkonstante (58, 59) zur progressiven Veränderung der Amplitude der Ausgangsgröße von einer Stufe zur anderen umfaßt.

9. Vorrichtung nach einem der Ansprüche 1 bis 8, dadurch gekennzeichnet, daß jeder Steuerkreis (20) einen Verzögerungskreis (42, 43) umfaßt, der den Ausgang des Auswahlkreises (39) während einer bestimmten Zeit ab Unterspannungsetzen des Netzes zwecks Beaufschlagens der Zündung der zugehörigen Quelle mit einer vorbestimmten, reduzierten Beleuchtungsstärke hemmt.

10. Vorrichtung nach einem der Ansprüche 1 bis 9, dadurch gekennzeichnet, daß der Auswahlkreis (39) einen Zähler umfaßt, der die Taktsignale (H) empfängt und mehrere an den Programmkreis (40) angeschlossene Ausgänge (1 — 16) enthält, wobei an einem dieser Ausgänge ein Signal erscheint, wenn eine bestimmte Anzahl an Taktsignalen (H) gezählt worden ist.

11. Vorrichtung nach einem der Ansprüche 1 bis 10, dadurch gekennzeichnet, daß der Ausgangskreis (50) mehrere wahlweise als Funktion der gewählten Leistung gesteuerte Unterbrecherkreise (52a bis 52e) umfaßt, wobei jeder Unterbrecherkreis eine Steuerklemme besitzt und zwischen einer Einzelklemme (a' bis e') und einer gemeinsamen Ausgangsklemme (54) abzweigt.

12. Vorrichtung nach Anspruch 11, dadurch gekennzeichnet, daß die Einzelklemme eine von mehreren gestaffelten Zwischenklemmen (a' bis e') eines Spannungsteilerkreises (57) ist.

13. Vorrichtung nach einem der Ansprüche 1 bis 12, dadurch gekennzeichnet, daß der Programmkreis (40) in Form eines Steckmoduls vorliegt.

14. Vorrichtung nach einem der Ansprüche 1 bis 13, dadurch gekennzeichnet, daß der Leistungsveränderungskreis (10) und der Steuerkreis (20), die einer Lichtquelle (3) zugeordnet sind, mit elektrischer Energie von einem Netz versorgt und in einem Gehäuse untergebracht sind, auf welchem die Lichtquelle montiert ist.

15. Vorrichtung nach einem der Ansprüche 1 bis 14, dadurch gekennzeichnet, daß zumindest der Taktgeberkreis (30), der Programmkreis (40) und der Auswahlkreis (39) in Form von integrierten Schaltungen realisiert sind.

16. Vorrichtung nach einem der Ansprüche 1 bis 14, dadurch gekennzeichnet, daß zumindest der Taktgeberkreis (30), der Programmkreis (40) und der Auswahlkreis (39) mittels eines Mikroprozessors realisiert sind.

## Claims

1. Device for controlling the variations in time of the intensity of a lighting installation, particularly a public lighting installation, comprising light sources (1), each one being connected to an A. C. power supply system (6), said control device including: power variations circuits (10) connected respectively to the different sources and each one comprising means (12) for varying the electrical power supplied to the source in response to the magnitude variations of an electrical quantity (S); and control circuits (20) associated respectively to the different sources (1) for controlling the magnitude variations of the said electrical quantity (S) in relation to time, so as to vary in a predetermined manner the illuminating power of said sources (1) during a working period of said installation, characterized in that each control circuit (20) associated to a source (1) comprises:

— a clock circuit (30) delivering clock signals (H) at predetermined time intervals,
— an illuminating programme circuit (40) in which is recorded a programme representing the required timed variations of the illuminating power supplied by source (1) for a given period,
— a selection circuit (39) receiving the clock pulses (H) and connected to the programme circuit (40) for selecting an illuminating power dependent on the elapsed time from the beginning of the said period, and,
— an output circuit (50) connected to the programme circuit and converting said selected power to a particular magnitude of said electrical quantity (S).

2. Device according to Claim 1, characterized in that the clock circuit (30) comprises a divider (31) of the frequency of the power supply system.

3. Device according to any one of claims 1 and 2, characterized in that the programme circuit (40) is formed by a matrix having a plurality of inputs ($l_1 - l_{16}$) connected to said selection circuit (39), and a plurality of outputs (a—e) corresponding to different illumination intensities, and each connected to a control terminal of a particular transistor (52a—52e) and connecting elements (41) connecting each input to a determined output dependent on the requested programme of illuminating intensity variations.

4. Device according to any one of claims 1 to 3, characterized in that each control circuit (20) comprises a reset circuit (38, 39) connected to the power supply system (6) to reset the clock circuit (31) to zero when the system is powered.

5. Device according to any one of claims 1 to 4, characterized in that the output quantity (S) is a continuous electrical voltage whose magnitude varies according to the selected intensities.

6. Device according to claim 5, characterized in that the power variation circuit (10) associated to a light source (1) comprises a triac (3) connected between a terminal (5) of the power supply system (6) and the source (1), and a monostable multivibrator circuit (12) delivering pulses to keep the triac (3) non-conductive during an adjustable fraction of each alternation of the voltage of the system, and in that the amplitude of the output (S) of the associated control circuit (20) is applied to the said monostable as loading voltage the variation of which causes a reverse variation of the duration ($\theta$) of the pulses delivered by the monostable (12).

7. Device according to claim 6, characterized in that the power variation circuit (10) comprises a circuit (13) connected between the monostable (12) and a control electrode (3a) of the triac (3) to cause the opening of the latter during duration ($\theta$) of the pulses delivered by monostable (12), the electrical quantity (S) supplied by the control circuit being a continuous voltage whose magnitude rises when the selected illuminating intensity increases.

8. Device according to any one of claims 1 to 7, characterized in that the output quantity (S) is a continuous electrical voltage which varies stepwise according to selected levels of illuminating intensities, and in that the output circuit (50) of the control circuit (20) comprises a circuit with time constant (58, 59) for varying progressively the magnitude of the output quantity from one step to another.

9. Device according to any one of claims 1 to 8, characterized in that each control circuit (20) comprises a timing circuit (42, 43) responsive to the powering of said power supply for inhibiting the output of the selection circuit (39) and imposing, upon switching on of said associated source, a predetermined reduced illuminating intensity for a predetermined time interval.

10. Device according to any one of claims 1 to 9, characterized in that the selection circuit (39) comprises a counter receiving the clock signals (H) and having a plurality of outputs (1—16) connected to the programme circuit (40), a signal appearing on one of these outputs when a particular number of clock signals (H) has been counted.

11. Device according to any one of claims 1 to 10, characterized in that the output circuit (50) comprises a plurality of resistors (52a to 52e) selectively controlled according to the selected power, each resistor having a control terminal and being connected between a particular terminal (a' to e') and a joint output terminal (54).

12. Device according to claim 11, characterized in that said particular terminal is one among staggered intermediate terminals (a' to e') of a voltage dividing circuit (57).

13. Device according to any one of claims 1 to 12, characterized in that the programme circuit (40) is in the form of a plugging-in module.

14. Device according to any one of claims 1 to 13, characterized in that the power variation circuit (10) and the control circuit (20) each associated to a light source (3) are supplied with electrical energy from said power supply system and contained in a housing on which said light source is mounted.

15. Device according to any one of claims 1 to 14, characterized in that the clock (30), programme (40) and selection (39) circuits are in the form of an integrated circuit.

16. Device according to any one of claims 1 to 14, characterized in that at least the clock (30), programme (40) and selection (39) circuits are realized by means of a microprocessor.

FIG-1

0 037 315

Fig. 2

Fig. 3